# EUROPEAN PATENT APPLICATION

(11) **EP 1 638 156 A2**
(43) Date of publication of application: **22.03.2006**
(21) Application number: 05108664.3
(22) Date of filing: 20.09.2005
(51) Int. Cl.: H01M 2/12, H01M 2/08, H01M 10/06

(54) **Accumulator with explosion-proof valve device.**

(30) Priority: 20.09.2004 IT VI20040218
(71) Applicant: Stocchiero, Franco, 36050 Montorso Vicentino (VI) (IT)
(72) Inventor: Stocchiero, Franco, 36050 Montorso Vicentino (VI) (IT)
(74) Representative: Bonini, Ercole

(57) **Abstract**

An electric accumulator, in particular of the lead acid type, comprising a container for the active elements that make up the accumulator arranged in one or more cells, and a cover (10) that closes said container, said cover having plugs (8) for sealing the access to each of the cells, said accumulator being equipped with at least one explosion-proof device for controlled venting of the gasses evolved within the accumulator during its operation. Said explosion-proof device comprises: a venting duct (83) for releasing the gas that is produced by one or more cells of the accumulator, and having a venting outlet (84) at one end of it; an element for sealing (9) the venting outlet having at least one flexible portion capable of sealing the venting duct (83) until a certain pressure is reached, above which said at least one flexible portion has one or more areas forming, in conjunction with the venting duct, micro-slits which allow the gas to escape when its pressure exceeds a pre-determined level, and whose width prevents the entry into the battery of any flames that develop outside the battery.

## Description

The invention relates to an electric accumulator, also known as battery, having an explosion-proof valve device to trap and release gasses generally present under the cover of said accumulator.

The use of accumulators with explosion-proof features occurs in certain types of application such as, for example, in electric trucks, electrical equipment, telephone exchanges, uninterruptible power supplies, and recently also in automotive starter batteries.

Hereinafter the terms accumulator and battery will both be used to refer to lead acid batteries.

It is known that electric lead acid accumulators essentially comprise a closed container with a cover, within which are a series of cells into which are inserted the active elements, also called plates, which are positive or negative and are immersed in an electrolyte, generally an aqueous sulphuric acid solution.

After undergoing a forming process, the plates are electrically connected to each other and give rise to chemical reactions processes with the electrolyte producing an electrical current that collects at the poles of the accumulator.

During its working life, the accumulator is subject to numerous charging and discharging cycles during which the water in the electrolyte solution tends to separate, resulting in the development of hydrogen.

It is therefore necessary to maintain an adequate level of electrolyte, topping up the solution level with distilled water so as to maintain the original concentration of electrolyte, and also to control the generation of hydrogen in order to prevent that its pressure exceeds certain limits that can lead to the explosion of the battery.

It is known that hydrogen is highly inflammable, even if present in moderate concentrations in the air.

Studies have demonstrated that a mixture of hydrogen and air becomes inflammable when the hydrogen concentration in the mixture is between a minimum of 4% and a maximum of 75%. A concentration of hydrogen in the air that is lower than 4% will not ignite even in the presence of sparking.

A concentration of hydrogen in the air that is greater than 75% will also not ignite since the content of oxygen in the air is lower than the mass necessary for a flame to develop.

Under normal operating conditions of the battery it is not uncommon that the concentration of the hydrogen which is released through the vents of the battery is comprised within the limits of inflammability, that is, greater than 4%.

For this reason, taking advantage of the fact that hydrogen is highly volatile, gas vents are used to channel the hydrogen out of the battery and disperse it into the air.

Another danger is that, because of its inflammability, the hydrogen may rapidly travel from the exterior to the interior of the battery, causing it to explode.

For this reason many types of batteries, as will be described in more detail below, are equipped with explosion-proof pellets that are placed inside the hydrogen vents in order to prevent the flame from propagating back into the battery.

Indeed, if for any reason a flame develops outside an accumulator, for example caused by a spark and the concentration of hydrogen is greater than 4%, the flame, which should pass in any case through the explosion-proof pellet, is prevented from returning into the battery by micro-perforations in these explosion-proof pellets.

Indeed, the labyrinthine path of the micro-perforations causes the flame to be extinguished before it reaches the inside of the battery.

There are various types of lead acid accumulators that will be briefly described below and for each of these the problem arises of preventing the hydrogen, which develops during normal operation, from causing the accumulator to explode because of the propagation of the flame from the exterior to the interior of the accumulator.

The so called "recombination-type" batteries are manufactured according to working principles providing special separators placed between two plates in each cell. Each cell component in the battery is hermetically sealed so that the gasses that evolve from the electrochemical reactions are kept within each cell and are used for the chemical reactions in order to regenerate the battery.

Indeed, these gasses are recombined with the ions that are produced during the electrochemical processes. In these types of batteries air must nevertheless be prevented from entering from the exterior.

Furthermore, in order to prevent the build-up of gasses at high pressure in the battery, in one or more cells of it, on account of overheating caused for example by excessive power supply, or for any other reason, the battery is equipped with a one-way gasses vent valve, so that the battery is always protected from the above mentioned problems.

In recombination batteries, plugs for topping up the electrolyte are not usually present, since recombination does not allow topping up because it would cause air to enter the batteries from the exterior. Consequently, the cover of a recombination battery provides a hermetic closure for the container and its cells, with a one-way gas vent valve for any excess pressure that may develop within the battery.

Patent IT1258609 describes covers for recombination batteries that are equipped with hermetically sealed plugs for each cell and having holes for communicating with a gasses duct at the end of which there is a one-way gas vent valve.

If necessary, depending on the environmental conditions in which the battery is used, explosion-proof pellets can also be placed at the end of these gas vent ducts in order to prevent any flames that develop as a result of the build-up of gasses escaping from the accumulator to propagate back into the accumulator itself through the gas ducts, creating the risk of explosion by ignition of the gasses inside the same accumulator.

Recently, free-electrolyte accumulators have been developed, that is, accumulators whose cells are not sealed off from one another, but are equipped with a special cover inside of which there is a tank that replaces the distilled water in each cell, keeping the level of electrolyte constant.

Another feature of batteries with this type of cover is that the cover is also designed to prevent the acid in each of the individual cells from mixing with that in the other cells, if the battery is knocked over. Furthermore, this special cover ensures that a normal level of the electrolyte is restored when the battery returns to an upright position.

This special cover with a tank is also equipped with a channel for discharging the battery gasses and a gas vent valve for these gasses at the end of the channel.

In their simplest and more traditional forms, the accumulators are instead equipped with a screw-on cap on the cover that is connected to each cell and can be screwed off in order to top up each cell during the working life of the accumulator.

It is clear that these plugs are also equipped with discharge perforations for the gasses that develop within each cell during the operation of the battery and in particular during the battery's recharging phase.

Even the free-electrolyte accumulators in the two examples described herein are subject to the danger of explosion and therefore, according to current technology, are preferably equipped with explosion-proof pellets. If there is a single hydrogen discharge duct to the exterior, as mentioned above, these accumulators are equipped with an explosion-proof pellet at the very end of the duct, before the gas is discharged into the air.

If the free-electrolyte accumulators do not have a single channel to discharge the gasses, to prevent the battery from exploding, each plug located on the cover must be equipped with an explosion-proof pellet.

Essentially, in accordance with current technology, any type of battery classified as having explosion-proof features must have an explosion-proof pellet for each plug or for each hydrogen gas vent to the battery's exterior.

The use of explosion-proof pellets in batteries in general and in particular in the type described herein has two types of disadvantages.

The first is that the insertion of an explosion-proof pellet involves in itself a cost that is not negligible, since such pellets are made of porous material and require a suitable housing in the discharge duct or in each plug for each battery cell.

Another considerable disadvantage is that if the surfaces of such pellets are surrounded by electrolyte fumes, they may eventually become impermeable and therefore no longer able to perform the function for which they were intended, namely to break up the flame into a plurality of small channels, thus extinguishing the flame by depriving it of oxygen.

If the explosion-proof pellet becomes impermeable, the flame finds other channels to travel through and reach the interior of the battery, leading to an explosion.

The aim of the present invention is to overcome the above mentioned disadvantages.

A first aim of the invention is to provide an electric lead acid accumulator with explosion-proof features but not equipped with explosion-proof pellets.

It is a further aim of the invention to provide an explosion-proof electric accumulator that is inexpensive to produce and costs less than accumulators fitted with explosion-proof pellets.

It is a further aim of the invention to provide a lead acid electric accumulator with explosion-proof features that is easy to manufacture.

A further aim is to provide an economically-priced electric accumulator with explosion-proof features.

All of the aims referred to above and others that shall be described in more detail below may be achieved by means of a lead acid electric accumulator equipped with an explosion-proof device comprising a valve assembly whose specific features are described in the main claim.

According to the invention the accumulator is equipped with at least one explosion-proof device comprising a container for the active elements constituting said accumulator arranged in one or more cells, and a cover that closes said container,
said cover having plugs for sealing the access to each of said cells,
said accumulator being provided with at least one explosion-proof device for the controlled venting of the gasses that develop within said accumulator during its operation,
that is characterised in that said at least one explosion-proof device comprises:
- a venting duct for releasing the gas that is produced by said one or more cells of said accumulator and having a venting outlet at one end of it;
- an element for sealing said venting outlet having at least one flexible portion capable of sealing said venting duct until a certain pressure is reached, said at least one flexible portion having one or more areas forming, in conjunction with said venting duct, micro-slits which allow the gas to escape when its pressure exceeds a pre-determined level, and whose width prevents the entry into the battery of any flames that develop outside said battery.

It is clear that the feature of the micro-slits of the sealing element section, which is created free from the venting duct coupling, functions essentially in the same way as the micro-perforations in the explosion-proof pellet. Indeed, it creates a flame barrier effect which prevents the flame from spreading from the exterior of the battery to the interior thereof, which if it occurred would cause the battery to explode.

For this reason the sealing elements, which may have a wide variety of different shapes, for example caps or plugs, are made in sizes that provide a sealing coupling until the maximum pressure established for the safety of the battery is reached and have elastic nature features in at least one section of them, such that, during the discharge of gas above a certain level of pressure, the empty area that is created by the escape of the gas may be compared to a micro-slit. The size of this micro-slit should be almost negligible, but should allow the discharge of the gas as through a nozzle while preventing any flames that may develop outside the battery from entering.

Naturally the explosion-proof effect may be achieved even if the empty area between the sealing elements and the gas vent duct is formed by two or more micro-slits, provided they are not interconnected.

It is also clear that with the explosion-proof device according to the invention, the use of an explosion-proof pellet in addition to the valve assembly as defined, cannot be justified and is completely useless since the valve assembly of the particular size provided itself acts as an explosion-proof device.

Substantially, the invention therefore involves choosing a specific material to use for the sealing element that renders at least a part of said element plastic and flexible, and making it of a size such that when the pressure caused by the gasses build-up is exerted upon it, at least a venting section is provided such as to only allow the gasses to be discharged, but not to allow any flames to enter.

Additional features and aspects of the invention are described in more detail below in the accompanying drawings, which illustrate the preferred embodiments of the invention without limiting the scope of its application, and in which:
- fig. 1 shows a cross-section of an explosion-proof device belonging the prior art, housed within a battery plug;
- fig. 2 shows a view of a cover for a free acid type battery equipped with a single channel for conveying exhaust gasses and with the device according to the invention;
- fig. 3 is a cross section through line II-II of the cover shown in fig. 2;
- fig. 4 shows a view of a cover for recombination batteries equipped with a screw cap for each battery cell and with the device according to the invention;
- fig. 5 is a cross section through line IV-IV shown in fig. 4;
- fig. 6 shows a cross section of another cover for a recombination battery with the device according to the invention;
- fig. 7 is an enlarged cross section showing the gasses venting duct and the sealing element applied to it according to the invention;
- fig. 8 shows the duct and the sealing element of fig. 7 during the venting of the gasses;
- fig. 9 shows a possible embodiment of the gas venting duct section and of the sealing element applied to it according to the invention;
- fig. 10 shows the gas venting duct and the sealing element of fig. 9 during the venting of the gasses;
- fig. 11 shows another possible embodiment of the venting duct and of the sealing element applied to it according to the invention;
- fig. 12 shows the gas venting duct and the sealing element of fig. 10 during the venting of gasses;
- fig. 13 shows another embodiment of the plug shown in fig. 5;
- fig. 14 shows a view of the sealing element present in fig. 13.

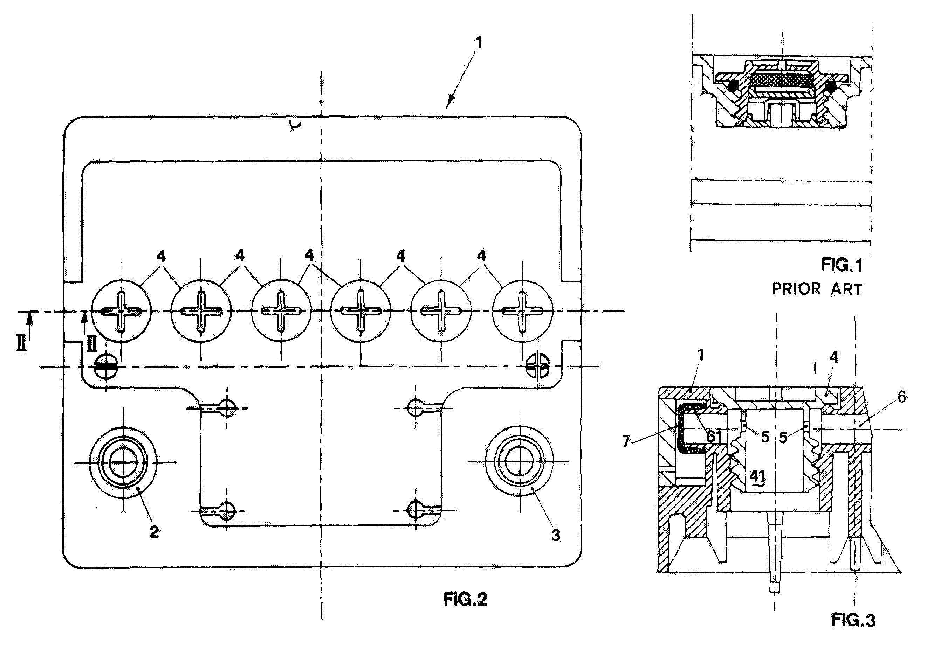

Fig. 1 shows a cross section of a plug for a battery equipped with an explosion-proof device according to the prior art consisting of a valve assembly upon which an explosion-proof pellet rests.

The examples that follow show an explosion-proof device constructed solely in accordance with the features of the invention, but without the presence of the explosion-proof pellet.

Fig. 2 shows a cover for a free acid type battery, labelled 1 as a whole, equipped with pole terminals 2 and 3 and presenting a series of plugs 4 screwed on the cover 1.

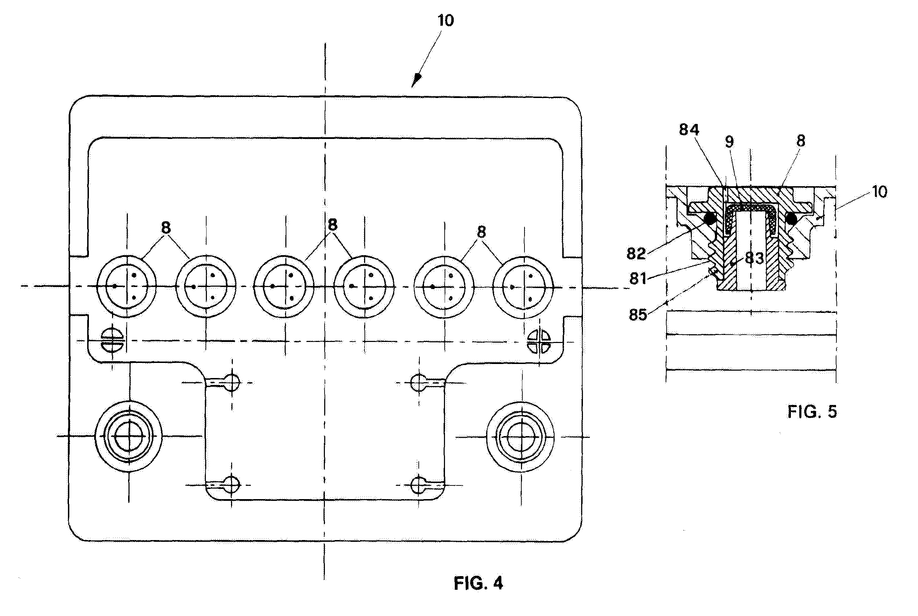

As may be seen in fig. 3, each of the plugs 4 has two through-holes 5 which place the internal cavity 41 of the plug 4 in communication with the internal duct 6 belonging to the cover and which ends with a venting duct having a tubular shape, labelled 61, to which the cap-shaped sealing element 7 is applied.

As previously mentioned, each plug 4 is fitted over a cell forming the battery, which is closed by the cover 1. In this manner, the hydrogen gasses that develop in each underlying cell make their way to the cylindrical cavity 41 in the plug and exit through the holes 5 travelling through the channel 6. The gasses remain in this channel because the sealing element 7 prevents theme from exiting until the predetermined pressure is reached.

It should be noted that the cover 1 is made from moulded plastic, for example polypropylene, and during the moulding process the channel 6 is also moulded.

The plugs **4,** which are generally made of the same material as the cover **1,** are mounted on their seats by means of screw threads 42 present in the cover 1.

The sealing element **7** is made, in this example, of a fluoro-silicone rubber that is sufficiently resistant to a wide variety of solvents and chemicals, for example H₂SO₄, and maintains elastic qualities that are virtually unchanged throughout a wide variation of operating temperatures.

EPDM-type rubbers (ethylene-propylene terpolimer) are also suitable for this purpose.

Substantially, the silicone rubber chosen is of the highly stable type, in particular in regard to size, because, as will be described in more detail below, it is very important that when the hydrogen gas is discharged, after having exceeded a certain pressure within the battery, such as to apply a deforming force on the surface of the sealing element 7, this deforming force must be precisely controlled. Indeed, during the discharging of the gas, the free section between the coupling of the sealing element with the vent duct must form a microscopic slit of very small sizes such that the quantity of gas that exits occupies the entire free section and, at the same time, prevents any flame from returning, that is, the propagation of any flame back into the battery, the inevitable consequence of which would be the explosion of the battery.

The fact that the micro-slit functions as a barrier to the propagation of the flame within the battery arises from the fact that the walls of a hole or of a slit that is sufficiently small, for example a few tenths of a millimetre, act as a damper for the free radicals that feeds the flame, thus extinguishing the flame at the edge of the slit and thereby preventing the propagation of the flame inside the battery.

If these conditions are satisfied, the mixture of gas and air, and in particular hydrogen and air, even if ignited by sparks or flames, will not succeed in entering the battery because the flame is extinguished at the mouth of the slit.

By avoiding conditions under which the flame may enter the interior of the battery, it is clear that the valve device composed of the venting duct **61** and by the sealing element **7** is an explosion-proof device for all intents and purposes.

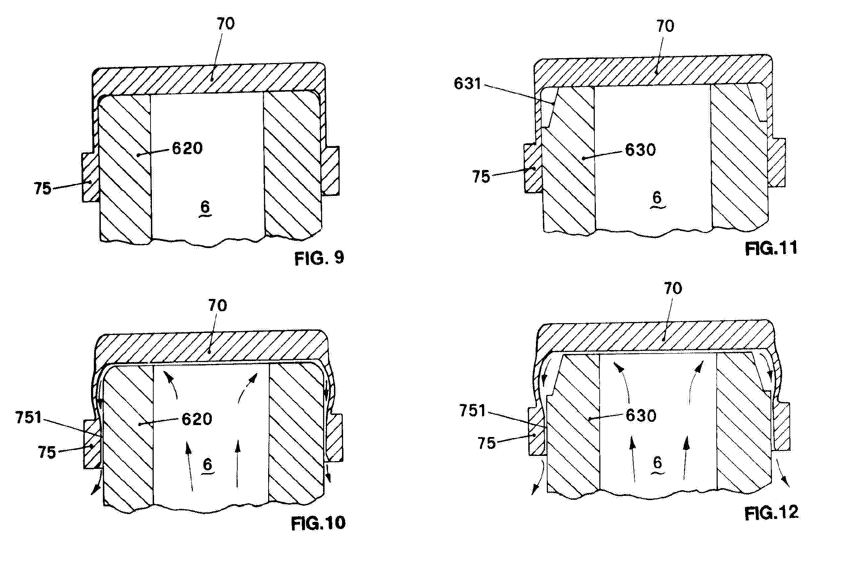

Figures 7, 9 and 11 illustrate different embodiments of details of the valve according to the invention applicable to the cover 1.

More specifically, it may be noted that in fig. 7 the gasses venting duct, labelled **610** in this case, has a venting outlet **611** with a tapered shape, while the sealing element 7 is substantially cylindrical in shape.

In this case, as may be observed in fig. 8, a chamber 71 is created between the duct 610 and the sealing element 7 that accumulates gas and then releases it as the pressure of the gas increases, until it is released through the ring-shaped passage 72 having the section of a micro-slit whose function is similar to that of a nozzle.

Once the gas pressure has been relieved, the sealing element 7, as may be seen in fig. 7, moves back into contact with the venting outlet **611** of the duct **610,** thus creating a tight seal preventing air from entering the battery, which is an essential condition for recombination batteries, as we shall see below.

Another form of duct/sealing element coupling is shown in fig. 9 where the gasses venting duct **620** is coupled with the sealing element **70.** In this case, the sealing element 70 is in the shape of a cap and presents a strengthening ring 75 for the end portion in order to resist high levels of pressure. Also in this case, as may be seen in fig. 10, when the pressure inside the channel 6 exceeds a certain level, the gas is discharged through the micro-slit 751 which, once again, functions as a discharge nozzle and prevents the passage of flame from the exterior of the battery to the interior thereof.

Yet another embodiment is shown in fig. 11 where the gasses venting duct, labelled 630 in this case, has the tapered section and is coupled with the sealing element 70, like that in fig. 10, presenting a strengthening ring 75.

Fig. 12 shows the outflow of the gas through the micro-slit 751 that is created between the duct 630 and the sealing element 70 due to excess gas pressure.

Fig. 4 shows another example of a cover, labelled 10 in this case for a recombination battery, in which the cover does not have a gas conveyance channel, but in which each cell is connected to a plug 8, visible in section in fig. 5, which may be screwed onto the cover 10 and which has explosion-proof features.

Indeed, the plug 8 has a screw thread 81 that ensures that the gas is not discharged, also preventing air from entering the interior of the battery thanks to an O-ring **82** pressed against a sloped area, as may be seen in fig. 5 when the plug is screwed on.

The plug **8** has an internal surface **85** that is cylindrical, or slightly tapered, in which is housed the duct for the venting of the gas **83** which is coupled to the free end of the sealing element 9, which is substantially the same as the sealing element 7 of fig. 7.

It can be seen that the duct 83 may be moulded separately from the cover 10 and then connected to the surface **85** of the plug **8,** or it may be moulded as one with the cover.

The coupling between the sealing element 9 and the duct 83 may be any of the types shown in fig. 7, 9 or 11 or even of the cylinder on cylinder type that is not shown in the drawings.

Naturally, even in this case, the size of the sealing element **9** and the material of which it is made must be such as to ensure that, when said sealing element is subjected to the discharge pressure, the difference between the free section of coupling between the duct and the sealing element forms a microscopic slit that will prevent flames from propagating. Excess gas pressure is relieved through the hole 84 in the plug 8.

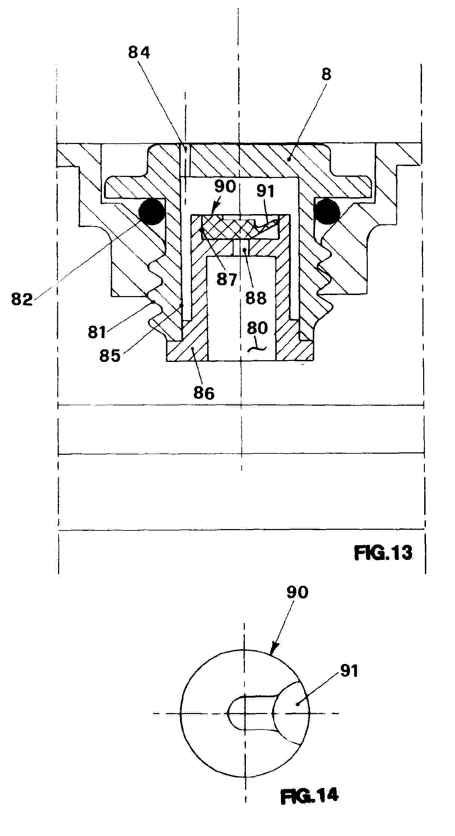

A constructional variation of the explosion-proof plug of fig. 5 is illustrated in fig. 13.

The constructional variation relates to the gas venting duct and the sealing element connected thereto.

In this case, the gas venting duct, labelled 86 and which is connected to the cylindrical surface 85 of the plug 8, presents at the free end a cylindrical seat 87 that houses the sealing element 90.

This sealing element 90 is composed of a disc of rubber or similar material that presents a portion 91 having a smaller width and which is therefore flexible.

The sealing element 90 ensures a seal until a certain level of gas pressure is reached inside the chamber 80 that causes the flexible portion 91 of the sealing element 90 to lift slightly in such a way as to discharge the gas to the exterior of the plug through the hole 84.

The micro-slit that is created between the wall 87 of the gas venting duct 86 and the flexible portion 91 of the sealing element 90 does not however allow any flame that may develop outside the plug 84 to enter the battery through this micro-slit.

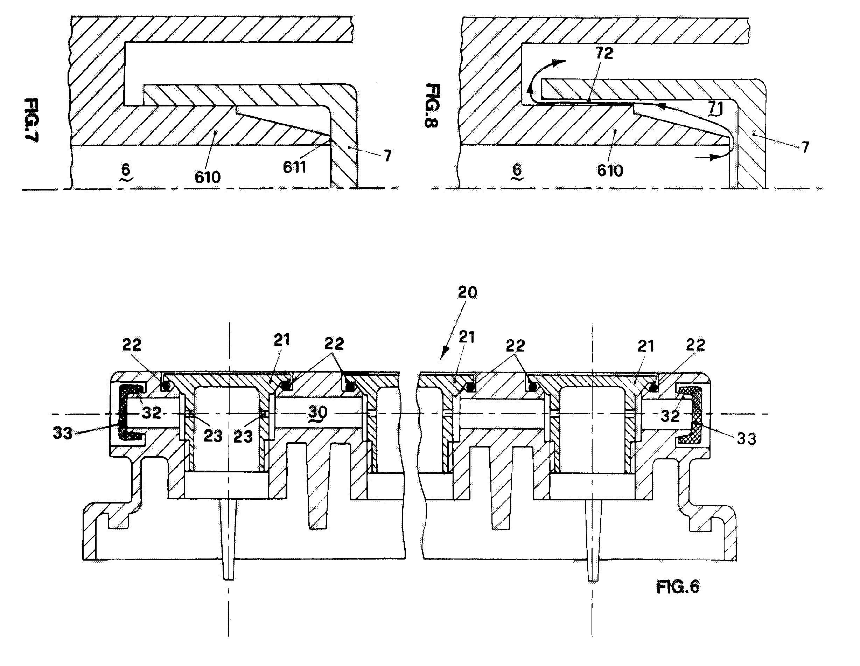

Fig. 6 shows a cross section of another type of cover which is also suitable for recombination batteries.

It may be observed that this cover, labelled **20** as a whole, presents plugs **21** each of which is sealed off from the exterior by an O-ring **22** that provides an airtight seal between the exterior atmosphere an the interior of the battery.

Each plug **21** also has a pair of holes **23** that connect it to a conveyance channel 30 at the ends 32 of which there are two sealing elements 33.

In this case, too, the device according to the invention allows the explosion-proof pellet to be eliminated simply by making the sealing elements **33** of a size that ensures a seal between the gas venting duct and the sealing element, and also by choosing suitable materials so that during the venting of the gas between the sealing element and the vent duct, the free section is small enough to create a flame barrier preventing flames from propagating back into the battery.

As we have seen, in free-acid type or recombination-type batteries, by using the covers in fig. 2, 4 or 6 equipped with the valve device according to the invention, it is possible to avoid the use of explosion-proof pellets that, according to the prior art, were required to be placed at least at the end of each gasses venting duct or, in the case for example of the cover shown in fig. 4, were required to be applied to each plug 8.

By contrast, according to the invention it is sufficient to apply to the gas venting duct a sealing element of specific dimensions and of a specific elasticity in order to achieve a battery with explosion-proof features as described.

## Claims

1. An electric accumulator, in particular of the lead acid type, comprising a container for the active elements that make up said accumulator arranged in one or more cells, and a cover (1, 10) that closes said container,
said cover having plugs (4) for sealing the access to each of said cells,
said accumulator being equipped with at least one explosion-proof device for the controlled venting of the gasses evolved within said accumulator during its operation,
**characterized in that** said at least one explosion-proof device comprises:
- a duct (61, 610, 630) for venting the gas that is produced by said one or more cells of said accumulator and having a venting outlet at one end of it;
- an element for sealing (7, 70) said venting outlet having at least one flexible portion capable of sealing said venting duct until a certain pressure is reached, said at least one flexible portion having one or more areas forming, in conjunction with said venting duct, micro-slits (72, 751) which allow the gas to escape when its pressure exceeds a pre-determined level, and whose width prevents the entry into the battery of any flames that develop outside said battery.

2. The accumulator according to claim 1) **characterized in that** said elastic sealing element (7, 70) is made of plastic material.

3. The accumulator according to claim 2) **characterized in that** said plastic material belongs to the group of synthetic rubbers that are resistant to mineral acids.

4. The accumulator according to claim 1) **characterized in that** said sealing element (7, 70) is made of material belonging to the group of fluoro-silicone rubbers.

5. The accumulator according to claim 1) **characterized in that** the end of said gas venting duct (620) that is connected with said sealing element (70) has a cylindrical shape.

6. The accumulator according to claim 1) **characterized in that** the end of said duct (610, 630) for the venting of the gas that is connected to said sealing element (7, 70) has a tapered shape.

7. The accumulator according to claims 5) or 6) **characterized in that** said sealing element (70) that is connected to said venting duct (620, 630) has a substantially cylindrical shape.

8. The accumulator according to claims 4) or 5) **characterized in that** said sealing element (70) has a substantially cylindrical shape and has an external strengthening ring in the proximity of the edge (75) which also has a cylindrical shape.

9. The accumulator according to claim 1) **characterized in that** said sealing element (70), which is connected to said venting outlet (620, 630), has a cap shape.

10. The accumulator according to claim 1) **characterized in that** said sealing element (9) connected with said venting outlet (83) has a cylindrical cap shape, said sealing element (9) being inserted into a housing located in the mouth of said venting duct (83) and having a portion that is smaller in width, said venting duct (83) being connected to the internal cylindrical surface (85) of said plug (8), said plug (8) having a venting hole (84).

11. The accumulator according to claim 1) **characterized in that said** sealing element (90), connected with said venting outlet (86), is substantially disc-shaped, said sealing element (90) being inserted into a housing (87) located in the mouth of said venting duct (86) and having a portion (91) that is smaller in width, said venting duct (86) being connected to the internal cylindrical surface (85) of said plug (8), said plug (8) having a venting hole (84).

12. The accumulator according to claims 10) or 11) **characterized in that** said gas venting duct (83, 86) is connected to each plug (8) of said cover.
